**Europäisches Patentamt**

**European Patent Office**

**Office européen des brevets**

(19)

(11) Veröffentlichungsnummer : **0 377 808 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **B29C 67/20, B29C 35/10,**
**// B29K21:00**

(21) Anmeldenummer : **89121271.4**

(22) Anmeldetag : **17.11.89**

(54) **Verfahren zum Herstellen von Latex-Schaumstoff.**

(30) Priorität : **13.01.89 DE 3900809**

(43) Veröffentlichungstag der Anmeldung :
**18.07.90 Patentblatt 90/29**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
**DE-A- 2 922 042**
**US-A- 4 499 036**

(73) Patentinhaber : **HÜLS**
**AKTIENGESELLSCHAFT**
**Patentabteilung / PB 15 - Postfach 13 20**
**W-4370 Marl 1 (DE)**

(72) Erfinder : **Knipp, Herbert**
**Stockwieser Kamp 20**
**W-4358 Haltern 5 (DE)**

EP 0 377 808 B1

## Beschreibung

Die Erfindung betrifft ein Verfahren zum Herstellen von Latex-Schaumstoff aus einem aufgeschäumten Latex, der Gelier-, Vulkanisier- und Verarbeitungshilfsmittel enthält, und Gelieren und Vulkanisieren des in einer Form befindlichen Latex-Schaumes durch Erwärmen sowie anschließendes Waschen und Trocknen des aus der Form entnommenen Latex-Schaumstoff-Formhörper. Als Latex wird die wäßrige Dispersion eines Polymeren bezeichnet.

Die Erfindung bezweckt, die Gelier- und Vulkanisierzeit zu verkürzen, das Verfahren apparativ einfacher und wirtschaftlicher zu gestalten und die Qualität des Latex-Schaumstoffes zu verbessern.

Die Herstellung und Zusammensetzung von Latices, die für dieses Verfahren geeignet sind, sind beispielsweise in DE-OS 37 04 118.5 und DE-OS 34 47 585.0 angegeben.

Beim Herstellen von Latex-Schaum nach dem Schaumschlagverfahren wird der Latex mit Vulkanisierhilfsmitteln und gegebenenfalls Verarbeitungshilfsmitteln versetzt und durch Einschlagen von Luft auf die gewünschte Dichte gebracht. Nach Erreichen des entsprechenden Verschäumungsgrades wird Geliermittel zugemischt und der Schaum in die Form gefüllt. Die Form wird geschlossen und sofort oder nach dem Gelieren des Schaumes zum Vulkanisieren in einen Applikator geschoben, der normalerweise mit Dampf beheizt wird. Nach dem Vulkanisieren wird der Latex-Schaumstoff als Formteil aus der Form entnommen, gewaschen und getrocknet. Die Formen haben nach dem Verlassen des Applikators eine Temperatur von 95 °C bis 100 °C. Nach dem Entnehmen der Formteile werden sie auf eine Temperatur unter 35 °C abgekühlt, bevor erneut Schaum in die Form gefüllt wird. Gemäß DE-OS 21 50 872.5 ist es möglich, den nach einer speziellen Rezeptur hergestellten aufgeschäumten Latex in 40 °C bis 70 °C warme Formen einzufüllen.

Bei großen und dicken Formteilen, wie sie z.B. für Polstermöbel und Matratzen eingesetzt werden, ist es schwierig, einen Schaumstoff mit durchgehend gleichmäßiger Struktur im gewünschten Qualitätsbereich zu erhalten. Beim Zuführen der Wärme von außen oder durch in der Form vorhandene Kanäle wird zunächst die Form erwärmt. Der Transport der Wärme in den gelierten Schaum ist zeitaufwendig und bei dicken Formteilen weniger gleichmäßig, da der Schaum eine relativ kleine Wärmeleitfähigkeit hat. Beim Abkühlen geht die zum Erwärmen der bis zu mehreren hundert Kilogramm schweren Metallform aufgewendete Energie zumindest teilweise verloren, auch dann, wenn man die Form nur auf eine Temperatur zwischen 40 °C und 70 °C abkühlt. Wegen der langen Vulkanisierzeit, die bis zu 40 Minuten betragen kann, werden beim kontinuierlichen Verfahren gleichzeitig viele Formen und lange Wärmekanäle benötigt, wenn man große Formteile ohne nennenswerte Wartezeit zwischen zwei Einfüllvorgängen herstellen will.

Bei Formteilen mit größerer Dicke, z.B. um 10 cm, ist das Erwärmen mit Dampf oder Heißluft unbefriedigend; der innere Bereich nimmt die Temperatur der Oberfläche nur sehr langsam an. In diesem Fall sind lange Vulkanisierzeiten zum Ausvulkanisieren der inneren Bereiche erforderlich. Bei zu langsamem Temperaturanstieg kann die Schaumstruktur im Inneren wesentlich beeinträchtigt werden, oder der Schaum kann vor dem Gelieren zusammenbrechen, wenn die Gelierung bei erhöhter Temperatur erfolgt.

Nach US-2 575 259 kann man den Schaum innerhalb von 1 bis 3 Minuten auf die gewünschte Temperatur erwärmen, wenn man die Wärme mittels eines elektrischen Hochfrequenzfeldes zuführt. Die besten Ergebnisse werden bei einer Frequenz von 6 bis 40 MHz erhalten, das optimale Ergebnis bei etwa 15 MHz.

Bei zu schnellem Ansteigen der Temperatur kann das im Schaum enthaltene Wasser verdampfen, und der Wasserdampf kann die Poren des Schaumes zerreißen; dadurch werden die mechanischen Eigenschaften des Schaumstoffes deutlich beeinträchtigt.

Bei der Herstellung von Latex-Schaumstoffen wird ganz überwiegend mit geschlossenen Formen gearbeitet. Nur in Ausnahmefällen wird "Streichware" in offenen Formen oder auf Bändern hergestellt, wobei diese Ware stets Vollplattenware ist und die Materialdicke normalerweise unter ca. 6 cm liegt.

In geschlossenen Formen werden bevorzugt dickere Formteile hergestellt. Die Form ist fast ausnahmslos mit nockenartigen Verdrängungskörpern versehen, die in die Form hineinragen. Diese Nocken dienen dem verbesserten Wärmeübergang und verhindern das stellenweise Zusammenfallen des Schaumes sowie dessen Ablösung vom Deckel während der Gelierphase.

Die von den Nocken im Formteil gebildeten Hohlräume erleichtern und beschleunigen das Trocknen des Formteils.

Die Nocken können unterschiedlich geformt sein. Sie sind fast ausschließlich auf der Innenseite des Deckels angebracht. Der Deckel liegt nicht luftdicht auf der Wanne auf. Überschüssiger Schaum, die beim Füllen der Form entweichende Luft und der bei der Wärmegelierung entstehende Überdruck entweichen hauptsächlich über Luftaustrittsöffnungen, die in den Ecken des Deckels angebracht sind, sowie zwischen Deckel und Formwanne. Durch diesen Überdruck wird ein geringer Teil des Schaumes ausgetrieben. Dieser Austrieb muß vor dem erneuten Befüllen der Form von Hand entfernt werden. Das ausgetriebene Material ist Abfall; bei einer Dichte von 0,05 bis 0,1 g/cm³ entsprechen wenige Massen-% an Abfall dem zehn- bis zwanzigfachen

2

Volumen.

Aufgabe der vorliegenden Erfindung ist, einen Latex-Schaumstoff - auch in dicker Schicht - mit erträglichem apparativen Aufwand durch gleichmäßiges Erwärmen zu gelieren und zu vulkanisieren, um einen Schaumstoff mit gleichmäßiger Porenstruktur auf wirtschaftliche Weise zu erzeugen.

Diese Aufgabe wird erfindungsgemäß gelöst durch ein Verfahren mit den in Anspruch 1 angegebenen Merkmalen.

Der aufgeschäumte Latex wird in eine Form aus nichtmetallischem Material eingefüllt. Das Material hat eine Wärmeleitfähigkeit von weniger als 1 W/m·K, bevorzugt weniger als 0,3 W/m·K. Geeignete Materialien für die Form sind solche Werkstoffe, deren Temperatur beim kontinuierlichen Verfahren zum Zeitpunkt der wiederholten Befüllung an der Innenseite der Form unter 100 °C liegt; dazu gehören z.B. Polysulfon, Polycarbonat, Polytetrafluorethylen, Polyethylen und Polypropylen. Die Form kann einheitlich aus einem Material oder aus Schichten verschiedener Materialien bestehen, oder sie kann beschichtet sein; beispielsweise kann eine Form auf der Innenseite aus Polypropylen oder Polytetrafluorethylen bestehen und auf der Außenseite aus glasfaserverstärktem Kunststoff.

Zum Zeitpunkt des Einfüllens des Latex-Schaumes kann die Form eine Temperatur von 50 °C bis 100 °C haben. Im Gegensatz zum bisher üblichen Verfahren braucht die Form nicht auf eine Temperatur unter 35 °C abgekühlt zu werden. Ferner ist es nicht notwendig, den geschäumten Latex nach einer speziellen Rezeptur herzustellen. Wegen der geringen Wärmeleitfähigkeit des nichtmetallischen Materials wird der Latex-Schaum beim Gelieren auch an den Stellen nicht unzulässig beeinträchtigt, die die Formenwandung berühren. Die Wärme, die die Form bei den vorhergehenden Vulkanisierprozessen aufgenommen hat, bleibt in der Form fast vollständig erhalten.

Zum Gelieren und Vulkanisieren wird der in der Form befindliche Latex-Schaum mittels Mikrowellen innerhalb weniger Minuten auf eine Temperatur bis 100 °C erwärmt. Die Mikrowellen haben eine Frequenz von 1 bis 100 GHz, bevorzugt 2 bis 25 GHz. Die Abmessungen des Mikrowellenfeldes lassen sich in bekannter Weise an die Abmessungen der Form anpassen.

Die Schichtdicke des in die Form eingefüllten Latex-Schaumes kann in weiten Bereichen bis hinauf zu mehreren Dezimetern variiert werden. Auch in sehr dicker Schicht geliert und vulkanisiert der Schaum sehr gleichmäßig.

Die Verweilzeit des Latex-Schaumes im Mikrowellenfeld ist abhängig von der Leistungsdichte des Feldes, vom Wärmebedarf des Latex-Schaumes, der zum Erreichen der gewünschten Temperatur unterhalb 100 °C notwendig ist, und von der Zeit, die der Schaum zum Vulkanisieren benötigt. Die optimale Verweilzeit und die einzustellende Leistungsdichte des Feldes werden in einem Vorversuch ermittelt.

Die Verwendung eines Mikrowellenfeldes ist vorteilhaft beim Erwärmen des Latex-Schaumes bis zu dessen Vulkanisiertemperatur; letztere hängt deutlich ab von der Rezeptur, dem Polymer und der Erwärmungsgeschwindigkeit, nicht von der Art der Erwärmung.

Bei einer Dichte des Schaumstoffes von 0,1 g/cm³ ist eine Verweilzeit von 5 Minuten bei 3 cm Dicke und von 8 Minuten bei 15 cm Dicke des Schaumstoffes erreichbar, sofern man mit unveränderter Senderleistung arbeitet.

Das erfindungsgemäße Verfahren ist mit besonderem Vorteil für das Streichverfahren anwendbar, jedoch auch für das mit geschlossener Form arbeitende Verfahren. Die nockenartigen Ausstülpungen sind - falls vorhanden - auf der Innenseite des Formbodens angebracht.

Die Ausdehnung des Schaumes beim Wärmegelieren wird in die Höhe der Form eingerechnet. Dadurch entsteht bei diesem Verfahren kein Austrieb und praktisch kein Materialverlust, was von erheblicher wirtschaftlicher Bedeutung ist.

Die Gelierung im Mikrowellenfeld ist auch mit konventionell aufgebauten geschlossenen Formen möglich, sofern diese aus einem nichtmetallischen Werkstoff bestehen.

Das erfindungsgemäße Verfahren hat folgende Vorteile:

– Der Schaumstoff hat in seinem gesamten Volumen eine sehr gleichmäßige Porenstruktur und ein gleichmäßiges Reiß-Dehnungs-Verhalten; auch dicke Schaumstoff-Formkörper werden im Mikrowellenfeld "von innen heraus" gleichmäßig und schnell erwärmt.

– Der Schaumstoff ist in größerer Dicke als bisher in einwandfreier Qualität herstellbar; bei einseitigem Einstrahlen der Mikrowellen-Energie läßt sich Schaumstoff von mehr als 15 cm Dicke bei einer Dichte von 0,1 g/cm³ herstellen.

– Bei einwandfreier Qualität läßt sich eine Dichte des Schaumstoffes bis hinab zu 0,04 g/cm³ erreichen.

– Der Latex-Schaum kann nach wirtschaftlicheren Rezepturen aufgebaut sein. Der Anteil an Verarbeitungshilfsmitteln kann herabgesetzt und der Anteil an Füllstoff erhöht werden, ohne die Qualität des Schaumstoffes wesentlich zu beeinträchtigen.

– Die Formen aus nichtmetallischem Material verlieren zwischen den Befüllungen fast keine Wärmeenergie; eine Wärmeabstrahlung ist kaum vorhanden. Der Energieverbrauch ist also recht gering.

– Es werden nur wenige Formen benötigt. Die Anlage zum Gelieren und Vulkanisieren ist wesentlich kleiner als eine Anlage mit anderer Wärmequelle.

– Die Formen für das Erwärmen im Mikrowellenfeld haben keine Kanäle zum Durchleiten von Dampf oder Heizmittel und sind deshalb drucklos.

Das erfindungsgemäße Verfahren wird an folgenden Beispielen weiter erläutert.

### Beispiel 1

Ein nach einer bekannten Rezeptur hergestellter und mit Hilfsmitteln versetzter Latex wird in bekannter Weise mit Luft aufgeschäumt und mit einem Geliermittel versetzt. Der Geliermittelzusatz ist nach Art und Menge auf eine Gelierzeit des Latex-Schaumes von ca. 40 Minuten bei einer Temperatur von ca. 18 °C ausgelegt.

Zum Herstellen von Matratzen wird eine Form mit den Innenmaßen 200 cm x 100 cm x 15 cm benutzt. Die Form besteht aus Polypropylen. Sie hat eine Wanddicke von 2 cm und ist auf der Rückseite versteift. Die Form hat keinen Deckel; auf der Innenseite des Bodens sind Ausstülpungen angebracht. Die Form wiegt ca. 92 kg.

Der Latex-Schaum wird in die offene Form eingefüllt und mit einer Rakel glattgestrichen. Die Form wurde bereits bei vorhergehenden Gelier- und Vulkanisiervorgängen benutzt und hat zum Zeitpunkt des Einfüllens auf der Innenseite eine Temperatur von 91 °C. Die gefüllte Form wird in ein Mikrowellenfeld mit der Frequenz 2,45 GHz eingebracht. Die Senderleistung beträgt ca. 24 kW. Die spezifische Leistung beträgt ca. 1,2 kW pro Kilogramm eingefülltem Latex-Schaum und ist über die vom Schaum bedeckte Fläche annähernd gleichmäßig verteilt.

Innerhalb von 6 Minuten ist die Temperatur an jeder Stelle des Schaumstoff-Formkörpers auf knapp unter 100 °C gestiegen. Der Schaumstoff-Formkörper wird außerhalb des Mikrowellenfeldes aus der Form entnommen und in bekannter Weise gewaschen und getrocknet. Die Dicke des Formkörpers beträgt 13 cm. Die Dichte des Schaumes beträgt 0,08 g/cm$^3$ (ohne Berücksichtigung der von den Ausstülpungen erzeugten Aussparungen).

Die noch warme Form (89 °C auf der Innenseite) wird sogleich mit einer weiteren Menge Latex-Schaum gefüllt.

Für die kontinuierliche Fertigung vieler Formkörper werden nur vier der genannten Formen benötigt, von denen die erste mit Latex-Schaum gefüllt wird, die zweite im Mikrowellenfeld erwärmt wird, während aus der dritten das Formteil entnommen wird, und die vierte für das nächste Einfüllen von Latex-Schaum bereitsteht.

### Beispiel 2

Analog zu Beispiel 1 wird ein Latex hergestellt, mit Hilfsmittel versetzt und aufgeschäumt. Der Latex-Schaum wird in eine offene Form mit den Innenmaßen 200 cm x 100 cm x 17 cm und ohne Ausstülpungen auf der Innenseite des Bodens eingefüllt und mit einer Rakel glattgestrichen. Die gefüllte Form wird analog zu Beispiel 1 in ein Mikrowellenfeld gebracht.

Innerhalb von 6 Minuten ist die Temperatur an jeder Stelle des Schaumstoff-Formkörpers auf knapp unter 100 °C gestiegen, und der Schaum ist geliert und vulkanisiert.

Der aus der Form entnommene Schaumstoff-Formkörper hat eine Dichte von 0,05 g/cm$^3$. Seine Dicke beträgt 14 cm und ist über die gesamte Fläche von 2 m$^2$ praktisch konstant. Während des Gelierens und Vulkanisierens in der offenen Form ist die Dicke des Schaumes nur um ca. 18 % der Ausgangsdicke zurückgegangen.

### Patentansprüche

1. Verfahren zum Herstellen von Latex-Schaumstoff aus einem Latex-Schaum, der Gelier-, Vulkanisier- und Verarbeitungshilfsmittel enthält, und Gelieren und Vulkanisieren des in einer Form befindlichen Latex-Schaumes durch Erwärmen, sowie anschließendes Waschen und Trocknen des aus der Form entnommenen Schaumstoff-Formkörpers, gekennzeichnet durch

– Einfüllen des Latex-Schaumes in eine Form aus nichtmetallischem Material,

– die zum Zeitpunkt des Einfüllens in der den Latex-Schaum berührenden Fläche eine Temperatur von 45 °C bis 100 °C hat,

– Erwärmen des in der Form befindlichen Latex-Schaumes auf eine Temperatur bis 100 °C innerhalb von 3 bis 10 Minuten mittels Mikrowellen mit einer Frequenz von 1 bis 100 GHz.

2. Verfahren nach Anspruch 1, gekennzeichnet durch

– Einfüllen des Latex-Schaumes in eine Form, deren Material eine Wärmeleitfähigkeit von weniger als 1 W/m·K - bevorzugt weniger als 0,3 W/m·K - hat,
– Erwärmen des Latex-Schaumes in einem Mikrowellenfeld mit einer Frequenz von 2 bis 25 GHz.
3. Verfahren nach den Ansprüchen 1 und 2, gekennzeichnet durch
– Einfüllen des Latex-Schaumes in eine offene Form.
4. Verfahren nach den Ansprüchen 1 und 2, gekennzeichnet durch
– Einfüllen des Latex-Schaumes in eine geschlossene Form, die am Boden und gegebenenfalls am Deckel mit Nocken versehen ist.
5. Verfahren nach den Ansprüchen 1 bis 4, gekennzeichnet durch
– Einfüllen des Latex-Schaumes in eine Form bevorzugt aus Polycarbonat, Polysulfon, Polytetrafluorethylen oder Polypropylen.

## Claims

1. A process for the production of latex foam material from a latex foam which contains gelling, vulcanising and processing assistants and gelling and vulcanising the latex foam in a mould by heating and subsequently washing and drying the foam moulding after removal from the mould, characterised in that
– the latex foam is introduced into a mould which is made from nonmetallic material and
– which has a temperature of from 45°C to 100°C at the surfaces in contact with the latex foam at the time of introduction, and
– the latex foam in the mould is warmed to a temperature of up to 100°C over the course of from 3 to 10 minutes by means of microwaves having a frequency of from 1 to 100 GHz.
2. A process according to claim 1, characterised in that
– the latex foam is introduced into a mould whose material has a thermal conductivity of less than 1 W/m·K, preferably of less than 0.3 W/m·K, and
– the latex foam is warmed in a microwave field having a frequency of from 2 to 25 GHz.
3. A process according to either of claims 1 and 2, characterised in that
– the latex foam is introduced into an open mould.
4. A process according to either of claims 1 and 2, characterised in that
– the latex foam is introduced into a closed mould which is provided with lugs at the base and if desired at the top.
5. A process according to any of claims 1 to 4, characterised in that
– the latex foam is introduced into a mould preferably made from polycarbonate, polysulphone, polytetrafluoroethylene or polypropylene.

## Revendications

1. Procédé pour la préparation de latex alvéolaire à partir d'une mousse de latex renfermant des adjuvants de gélification, de vulcanisation et de façonnage, et pour la gélification et la vulcanisation de la mousse de latex se trouvant dans un moule, par chauffage, ainsi que par lavage et séchage subséquents du corps moulé en mousse que l'on a retiré du moule, caractérisé par
– l'introduction de la mousse de latex dans un moule en un matériau non métallique,
– qui, au moment de l'introduction, est à une température de 45 à 100°C dans la surface en contact avec la mousse de latex,
– le chauffage à une température allant jusqu'à 100°C de la mousse de latex se trouvant dans le moule, en l'espace de
– 3 à 10 minutes, au moyen de micro-ondes ayant une fréquence de 1 à 100 GHz.
2. Procédé selon la revendication 1, caractérisé par
– l'introduction de la mousse de latex dans un moule dont le matériau possède une conductivité thermique inférieure à 1 W/m.K - de préférence inférieure à 0,3 W/m.K,
– le chauffage de la mousse de latex dans un champ de micro-ondes dont la fréquence est de 2 à 25 GHz.
3. Procédé selon les revendications 1 et 2, caractérisé par
– l'introduction de la mousse de latex dans un moule ouvert.
4. Procédé selon les revendications 1 et 2, caractérisé par
– l'introduction de la mousse de latex dans un moule fermé dont le fond, et le cas échéant le couvercle, est pourvu de cames.

5. Procédé selon les revendications 1 à 4, caractérisé par
– l'introduction de la mousse de latex dans un moule de préférence en polycarbonate, en polysulfone, en polytétrafluoréthylène ou en polypropylène.